# EUROPÄISCHE PATENTSCHRIFT

(11) **EP 3 959 560 B1**
(45) Veröffentlichungstag und Bekanntmachung des Hinweises auf die Patenterteilung: **11.06.2025**
(21) Anmeldenummer: 20719581.9
(22) Anmeldetag: 01.04.2020
(51) Int. Cl.: G02B 27/01

(54) **VERFAHREN ZUR STEUERUNG DER HELLIGKEIT EINES VON EINER BILDGEBENDEN EINRICHTUNG EINES IN EINEM KRAFTFAHRZEUG BEFINDLICHEN HEAD-UP-DISPLAYS PROJIZIERTEN BILDES**
METHOD FOR CONTROLLING THE BRIGHTNESS OF AN IMAGE PROJECTED BY AN IMAGE-GENERATING DEVICE OF A HEAD-UP DISPLAY IN A MOTOR VEHICLE
PROCÉDÉ DE COMMANDE DE LA LUMINOSITÉ D'UNE IMAGE PROJETÉE PAR UN DISPOSITIF D'IMAGERIE D'UN AFFICHAGE TÊTE HAUTE SE TROUVANT DANS UN VÉHICULE AUTOMOBILE

(30) Priorität: 29.05.2019 DE 102019207952
(43) Veröffentlichungstag der Anmeldung: 02.03.2022
(73) Patentinhaber: VOLKSWAGEN AKTIENGESELLSCHAFT, 38440 Wolfsburg (DE)
(72) Erfinder: KÖNIG, Torben, 38118 Braunschweig (DE)
(86) Internationale Anmeldenummer: PCT/EP2020/059316
(87) Internationale Veröffentlichungsnummer: WO 2020/239298

(56) Entgegenhaltungen:
- DE-A1- 102009 041 205
- DE-A1- 102012 204 303
- US-A1- 2018 120 572

## Beschreibung

Die Erfindung betrifft ein Verfahren zur Steuerung der Projektionshelligkeit eines von einer bildgebenden Einrichtung eines in einem Kraftfahrzeug befindlichen Head-Up-Displays projizierten Bildes gemäß den Merkmalen vom Oberbegriff des Patentanspruchs 1.

Ein derartiges Verfahren ist aus der DE 10 2012 204 303 A1 bekannt geworden. Bei dem bekannten Verfahren wird zunächst ein Helligkeitsverlauf für die aus Sicht des Fahrers hinter dem virtuellen Bild liegende Hintergrundfläche bestimmt. Nach Bestimmen des Helligkeitsverlaufs auf Pixelebene wird dieser dynamisch in Bereiche ähnlicher Helligkeit unterteilt und den Segmenten bzw. Pixeln ähnlicher Helligkeit ein gleicher Helligkeitswert zugeordnet. Dies bildet die Grundlage für die Erstellung einer Helligkeitssteuermatrix. Zum Zwecke eines Segment individuellen Steuerns der Helligkeit durch die Helligkeitssteuermatrix wird jedem in seiner Helligkeit individuell gesteuerten Segment bzw. Pixel des ausgestrahlten Bildes ein Wert der Helligkeitssteuermatrix zugeordnet. Die Helligkeit der Segmente des ausgestrahlten Bildes wird so in Abhängigkeit der Helligkeitssteuermatrix gesteuert.

Von Nachteil ist hierbei, dass die Bearbeitung auf Pixelebene und vor allem die dynamische Unterteilung des Helligkeitsprofils in Bereiche ähnlicher Helligkeit sehr aufwändig ist und daher eine hohe Rechenkapazität und -geschwindigkeit voraussetzt, welche in der Regel nur im oberen Preissegment von Kraftfahrzeugen zur Verfügung gestellt werden kann.

Aus der DE 10 2009 041 205 A1 ist ferner ein Verfahren zur Regelung eines Head-Up-Displays in einem Fahrzeug bekannt. Dabei dient eine Kamera zur Erfassung der Fahrbahnoberfläche vor dem Fahrzeug. Eine Auswertung der Signale der Kamera (Helligkeits- und/oder Farbniveau der Fahrbahnoberfläche) dient zur Regelung der Helligkeit und/oder der Farbe des Projektionssignals des Head-Up-Displays. Der Messbereich zur Ermittlung der Helligkeit ist über die Belichtungszeit der Kamera einstellbar.

In der US 2018/120572 A1 wird eine Anzeigevorrichtung eines Fahrzeugs beschrieben, die ein Head-Up-Display zur Erzeugung eines virtuellen Bildes vor einer Windschutzscheibe im Sichtfeld eines Fahrers aufweist. Des Weiteren sind eine Innenkamera und eine nach außen gerichtete Kamera (Außenkamera) vorhanden. Die Innenkamera dient zum Erfassen der Blickrichtung bzw. von Augenbewegungen des Fahrers, die Außenkamera zur Aufnahme der Umgebung vor dem Fahrzeug. Zur besseren Sichtbarkeit des virtuellen Bildes wird die Helligkeit des zu erzeugenden, virtuellen Bildes auf das durch die Außenkamera aufgenommene Bild abgestimmt. Dies erfolgt zunächst durch Auswahl eines bestimmten Bildausschnitts innerhalb des aufgenommenen Bildes. In Abhängigkeit eines Augenbereichs bzw. in Abhängigkeit von Augenbewegungen der Augenpunkte des Fahrers wird ggf. der gewählte Bildausschnitt korrigiert. Anschließend wird die Helligkeit des Bildausschnitts aufgrund verschieden möglicher Algorithmen berechnet und die Helligkeit des zu erzeugenden, virtuellen Bildes an die Helligkeit des Bildausschnitts angepasst.

Es ist noch darauf hinzuweisen, dass das vorliegende Verfahren insbesondere in Verbindung mit sogenannten Augment-Reality-Head-Up-Displays (AR-HUDs) eingesetzt werden soll. Bei AR-HUDs wird das zu projizierende Bild nicht nur einige Zentimeter im Sichtfeld des Fahrers vor die Frontscheibe projiziert, sondern die Projektion erfolgt einige Meter vor dem Kraftfahrzeug auf eine dadurch bedingt sehr große Hintergrundfläche, zumeist die Fahrbahn. Die Bedeutung des Helligkeitsprofils der Hintergrundfläche für eine bedarfsgerechte Projektion des zu projizierenden Bildes ist daher sehr hoch.

Der Erfindung liegt daher die Aufgabe zu Grunde, ein Verfahren zur Steuerung der Projektionshelligkeit eines von einer bildgebenden Einrichtung eines in einem Kraftfahrzeug befindlichen Head-Up-Displays projizierten Bildes bereitzustellen, welches weniger Rechenleistung erfordert und daher kostengünstig zu realisieren ist.

Vorliegende Aufgabe wird mit einem Verfahren gemäß den Merkmalen von Patentanspruch 1 gelöst. Vorteilhafte Ausbildungen beziehungsweise Weiterbildungen des Verfahrens sind den abhängigen Ansprüchen zu entnehmen.

Die Erfindung geht aus von einem Verfahren zur Steuerung der Helligkeit eines von einer bildgebenden Einrichtung eines in einem Kraftfahrzeug befindlichen Head-Up-Displays projizierten Bildes. Das projizierte Bild wird in das Sichtfeld eines Fahrers reflektiert, wodurch der Fahrer ein virtuelles Bild wahrnimmt. Dabei wird ein Helligkeitsprofil für eine aus Sicht des Fahrers hinter dem virtuellen Bild befindliche Hintergrundfläche bestimmt. Aus dem Helligkeitsprofil wird wiederum eine Helligkeitssteuermatrix bestimmt, mit deren Hilfe eine Projektionshelligkeit des von der bildgebenden Einrichtung projizierten Bildes gesteuert wird.

Es werden die aufeinander folgenden, für eine bestimmte Zeitspanne durchgeführten Schritte durchgeführt:
- Aufnehmen von mehreren Hintergrundbildern der Hintergrundfläche mittels einer Kamera

Erfindungsgemäß werden die aufeinander folgenden, weiteren Schritte durchgeführt:
- Unterteilung jedes aufgenommenen Hintergrundbildes in ein vordefiniertes Raster von Sektoren
- Bestimmung eines örtlichen Helligkeits-Mittelwertes über alle Pixel eines jeden Sektors eines aufgenommenen Hintergrundbildes
- Ableitung eines für die Zeitspanne geltenden, zeitlichen Helligkeits-Mittelwertes eines jeden Sektors über alle aufgenommenen Hintergrundbilder
- Bestimmung der Helligkeitssteuermatrix, bestehend aus den den Sektoren jeweils zugeordneten, zeitlichen Helligkeits-Mittelwerten
- Sektor individuelles Steuern der Projektionshelligkeit für Sektoren des von der bildgebenden Einrichtung projizierten Bildes in Abhängigkeit der Helligkeitssteuermatrix, wobei das projizierte Bild in ein solches Raster von Sektoren unterteilt wird, welches dem Raster des aufgenommenen Hintergrundbildes entspricht.
   Die Sektorenanzahl der bildgebenden Einrichtung vom Head-Up-Display, deren Anordnung und Größe wird also mit der Sektorenanzahl der aufnehmenden Kamera bzw. des aufgenommenen Hintergrundbildes "synchronisiert", wobei dies nicht unbedingt voraussetzt, dass die Anzahl der Pixel von beiden identisch sein muss.

Es ist noch zu erwähnen, dass das erfindungsgemäße Verfahren selbstverständlich auch unter Einsatz von DMD-Technik (DMD=Digital Micromirror Device) durchgeführt werden kann, bei dem einzelne Bildbestandteile durch bewegbare Mikrospiegel erzeugt werden.

Durch diese Merkmale und Reihenfolge der Verfahrensschritte wird es ermöglicht, ein durch ein Head-Up-Display zu projizierendes Bild in Abhängigkeit des Hintergrundes, auf den es projiziert werden soll, bedarfsgerecht einzustellen, so dass ein Fahrer dargestellte Informationen gut erkennen kann, dennoch aber nicht geblendet wird. Insbesondere wird durch die Unterteilung jedes aufgenommenen Hintergrundbildes in ein vordefiniertes Raster von Sektoren erheblicher Rechenaufwand eingespart.

Gemäß einer Weiterbildung des Verfahrens wird vorgeschlagen, dass durch das vordefinierte Raster von Sektoren das aufgenommene Hintergrundbild und das projizierte Bild in gleichgroße, quadratische Bereiche aufgeteilt werden. Hierdurch kann eine erwünschte Abstimmung des projizierten Bildes auf den Hintergrund der Projektion optimiert werden.

Nach einer anderen Weiterbildung der Erfindung wird beim Sektor individuellen Steuern der Projektionshelligkeit jedem Pixel des von der bildgebenden Einrichtung projizierten Bildes innerhalb eines Sektors der gleiche Helligkeitswert zugeordnet. Diese Ausbildung trägt zu einer weiteren möglichen Senkung von Rechenaufwand bei.

Nach einer anderen Weiterbildung wird zudem vorgeschlagen, dass die zeitlichen Helligkeits-Mittelwerte der Sektoren als Matrix-Helligkeitswerte der Helligkeitssteuermatrix nacheinander und in fest vorgegebener Reihenfolge an eine Steuereinrichtung zum sektorindividuellen Steuern der Projektionshelligkeit des projizierten Bildes übermittelt werden. Auch diese Weiterbildung trägt zu einer Vereinfachung des Verfahrens bei. So können bei Sendung der Matrix-Helligkeitswerte in bestimmten Datenpaketen Informationen über die jeweilige Position eines gesendeten Matrix-Helligkeitswert innerhalb der Helligkeitssteuermatrix unterbleiben, da diese in einer Steuerlogik festgelegt werden können. Die Übermittlung der Matrix-Helligkeitswerte kann bspw. über einen Datenbus (z.B. CAN-Bus) erfolgen.

Es ist ferner vorteilhaft, wenn aus wenigstens einem Teil der Matrix-Helligkeitswerte der Helligkeitssteuermatrix Projektions-Helligkeitswerte des projizierten Bildes dadurch abgeleitet werden, dass ein jeweiliger Projektions-Helligkeitswert aus dem Produkt des jeweiligen Matrix-Helligkeitswertes mit einem vorgegebenen Erfahrungsfaktor gebildet wird. Die Festlegung der Erfahrungsfaktoren erfolgt also auf empirische Weise. Hierfür ist lediglich ein bestimmter Initialaufwand notwendig, der bei konkreter Durchführung des Verfahrens jedoch auch zur Verringerung des Rechenaufwandes beiträgt.

Weiterhin kann es zu einer Verringerung des notwendigen Rechenaufwandes beitragen, wenn durch die bildgebende Einrichtung zu projizierende Symbole, Piktogramme und/oder alphanumerische Zeichen auf Basis von Vektorgrafiken erzeugt werden. Auf diese Weise ist es dann mit wenig Rechenaufwand möglich, zu projizierende Symbole, Piktogramme oder alphanumerische Zeichen beliebig zu skalieren. Bei pixelgenauer Ablage derartiger Grafiken kann der Rechenaufwand zwar noch weiter verringert werden, allerdings unter Einbußen in der Flexibilität der Darstellung.

Schließlich wird gemäß einer sehr vorteilhaften Ausbildung des Verfahrens vorgeschlagen, dass eine Position der Augen des Fahrers erfasst und daraus eine Position des zu projizierenden Bildes abgeleitet wird. So ist beispielsweise denkbar, dass sich der Fahrer kurzzeitig etwas nach rechts oder links aus seiner normalen Sitzposition herausneigt. Dies kann beispielsweise mit Hilfe einer Innenraumkamera erfasst werden. Damit ändert sich auch die Position seiner Augen, was wiederum Einfluss hat auf den Ort bzw. die Lage des durch das Head-Up-Display zu projizierenden Bildes auf der Hintergrundfläche. Bei einer Neigung des Fahrers nach rechts erfolgt eine Projektion des Bildes daher entsprechend mehr rechts, bei einer Neigung nach links ist es umgekehrt.

Ein bevorzugtes Ausführungsbeispiel der Erfindung ist in den Figuren dargestellt und wird anhand der Figuren in der nachfolgenden Beschreibung näher erläutert. Dadurch werden auch noch weitere Vorteile der Erfindung deutlich. Gleiche Bezugszeichen, auch in unterschiedlichen Figuren, beziehen sich auf gleiche, vergleichbare oder funktional gleiche Bauteile. Dabei werden entsprechende oder vergleichbare Eigenschaften und Vorteile erreicht, auch wenn eine wiederholte Beschreibung oder Bezugnahme darauf nicht erfolgt. Die Figuren sind nicht oder zumindest nicht immer maßstabsgetreu. In manchen Figuren können Proportionen oder Abstände übertrieben dargestellt sein, um Merkmale eines Ausführungsbeispiels deutlicher hervorheben zu können.

Es zeigen, jeweils schematisch
- Fig. 1: ein Kraftfahrzeug mit einem Head-Up-Display, welches nach dem erfindungsgemäßen Verfahren arbeitet,
- Fig. 2: die Darstellung der Einteilung eines aufgenommenen Hintergrundbildes in ein Raster von Sektoren,
- Fig. 3: die Berechnung eines zeitlichen Mittelwertes aus mehreren örtlichen Mittelwerten,
- Fig. 4: die Darstellung einer Helligkeitssteuermatrix,
- Fig. 5: die Darstellung der Erzeugung von Projektionshelligkeiten aus Matrix-Helligkeitswerten und
- Fig. 6: die Darstellung einer Ansicht eines Fahrers aus einer Frontscheibe des Kraftfahrzeugs.

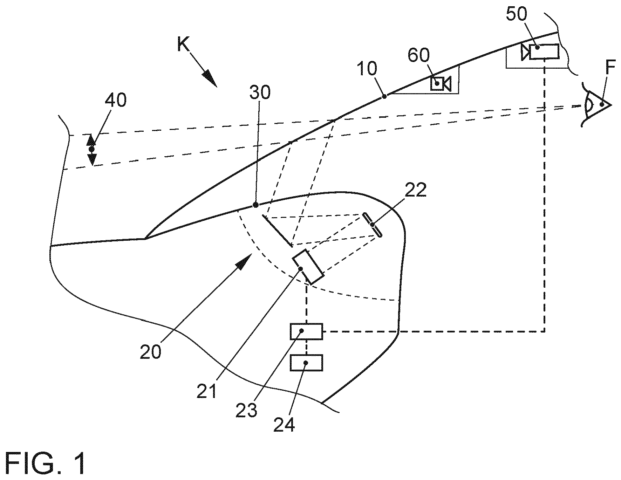

Es wird zunächst auf die Fig. 1 Bezug genommen. Darin ist ein Kraftfahrzeug K im Bereich seiner Frontscheibe 10 ersichtlich.

Das Kraftfahrzeug K ist mit einem sogenannten Head-Up-Display 20 ausgestattet, welches im Bereich einer Instrumententafel 30 im primären Sichtfeld eines Fahrers F verbaut ist.

Das Head-Up-Display 20 weist als eines seiner optischen Komponenten eine bildgebende Einrichtung 21 auf.

Durch die bildgebende Einrichtung 21 ist ein Bild 22 auf einen nicht näher bezifferten Spiegel (kann beispielsweise ein Spiegel in DMD-Technik sein) projizierbar, welches durch Reflexion in die Augen des Fahrers F gelangt. Dieser nimmt vor der Frontscheibe 10 beziehungsweise vor dem Kraftfahrzeug K ein virtuelles Bild 40 wahr.

Ferner ist ersichtlich, dass die bildgebende Einrichtung 21 signaltechnisch mit einer Steuereinrichtung 23 und diese wiederum signaltechnisch mit einer Speichereinrichtung 24 vorhanden ist.

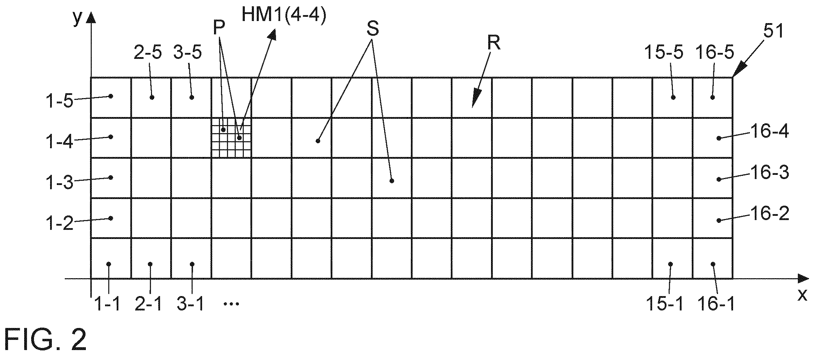

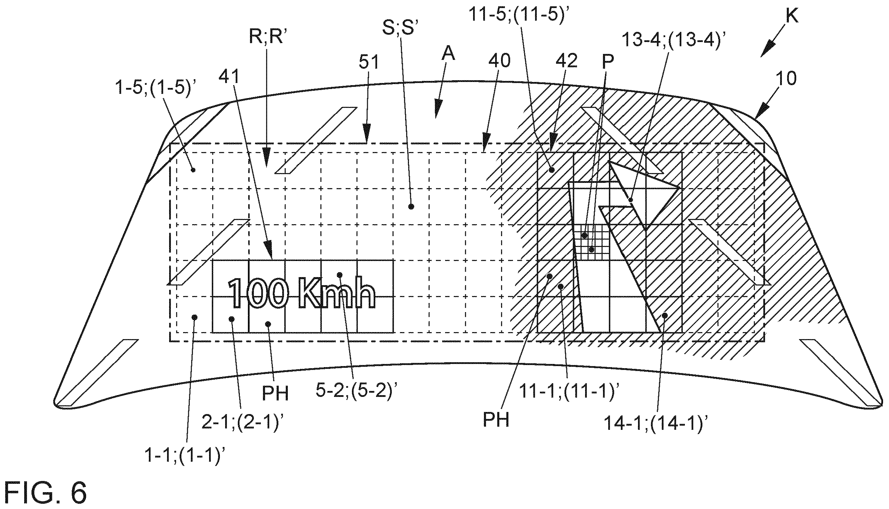

Eine ebenfalls signaltechnisch mit der Steuereinrichtung 23 verbundene Kamera 50 dient dazu, ein Bild von einem vor dem Kraftfahrzeug K befindlichen Hintergrund aufzunehmen, was dazu dienen soll, das virtuelle Bild 40 für den Fahrer F besser erkennbar und dennoch blendfrei erscheinen zu lassen. Dies wird im Folgenden näher erläutert:
So ist in der Fig. 2 ein aufgenommenes Hintergrundbild 51 von einer vor dem Kraftfahrzeug K liegenden Hintergrundfläche A (vergleiche Fig. 6) ersichtlich. Gemäß dem Verfahren werden in einer bestimmten Zeitspanne von beispielsweise wenigen Millisekunden mehrere Hintergrundbilder 51 aufgenommen. Deren Werte werden in der Speichereinrichtung 24 abgespeichert.

Jedes der Hintergrundbilder 51 wird nun von Seiten einer in der Steuereinrichtung 23 abgelegten Auswertelogik in ein fest vorgegebenes Raster R aus Sektoren S aufgeteilt. Vorzugsweise ist das Raster R derart gewählt, dass alle gebildeten Sektoren S gleich groß sind und besonders bevorzugt einen quadratischen Umriss aufweisen. So kann die Größe jedes einzelnen Sektors S beispielsweise 20 mal 20 Pixel P aufweisen.

Abweichend vom Ausführungsbeispiel ist es aber auch durchaus denkbar, dass die Sektoren S unterschiedliche Größe aufweisen und nicht quadratisch ausgebildet sind.

Jedem der Sektoren S ist innerhalb des Hintergrundbildes 51 eine bestimmte Position zugewiesen. So wird dem Sektor S in der ersten Spalte und ersten Zeile von links betrachtet die Position 1-1 zugewiesen. Dem Sektor S in der zweiten Spalte und ersten Zeile die Position 2-1, dem Sektor S in der ersten Spalte und fünften Zeile die Position 1-5 und so weiter.

Nach der Unterteilung des Hintergrundbildes 51 in die Sektoren S wird jedem der Sektoren S ein aus den Helligkeitswerten der einzelnen Pixel P gebildeter, örtlicher Helligkeits-Mittelwert HM1 zugeordnet. Dies wird für alle Sektoren S eines Hintergrundbildes 51 und für alle Hintergrundbilder 51 innerhalb einer bestimmten Zeitspanne durchgeführt. Beispielhaft ist der örtliche Helligkeits-Mittelwert HM1 (4-4) vom Sektor S für die Position in der vierten Spalte und der vierten Zeile in dem Hintergrundbild 51 aufgeführt. Aus den örtlichen Helligkeits-Mittelwerten HM1 eines Sektors S innerhalb einer Zeitspanne wird anschließend ein zeitlicher Helligkeits-Mittelwert HM2 gebildet.

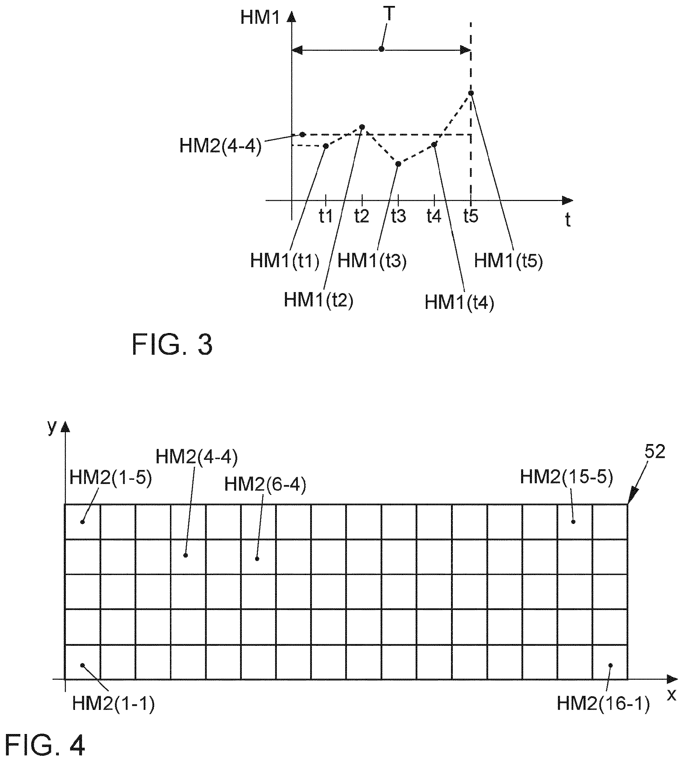

Anhand von Fig. 3 ist dies näher erläutert. Es ist in dieser Figur die örtlichen Mittelwerte HM1 über der Zeit t aufgetragen. Ferner ist eine Zeitspanne T ersichtlich, innerhalb der zu fünf Zeitpunkten t1 bis t5 von einem bestimmten Sektor S aus den jeweils gemessenen örtlichen Helligkeits-Mittelwerten HM1 (t1) bis HM1 (t5) ein zeitlicher Helligkeits-Mittelwert HM2 errechnet wurde. Dies wird für alle Sektoren S des Hintergrundbildes 51 durchgeführt.

Alle in dieser Weise errechneten, zeitlichen Helligkeits-Mittelwerte HM2 werden alsdann durch die Steuereinrichtung 24 in eine Helligkeitssteuermatrix 52 übertragen, welche in Fig. 4 dargestellt ist. In der Helligkeitssteuermatrix 52 wird also jedem Sektor S ein bestimmter, zeitlicher Helligkeits-Mittelwert HM2 zugeordnet. Die Zahlen in Klammern beziehen sich wiederum auf die Position eines Sektors innerhalb der Matrix.

So ist beispielsweise dem Sektor S in der ersten Spalte und ersten Zeile der zeitliche Helligkeits-Mittelwert HM2 (1-1) zugeordnet. Dem Sektor S in der fünfzehnten Spalte und der fünften Zeile ist der zeitliche Helligkeits-Mittelwert HM2 (15-5) zugeordnet. Dies erfolgt analog für alle Helligkeits-Mittelwerte HM2 der Helligkeitssteuermatrix 52.

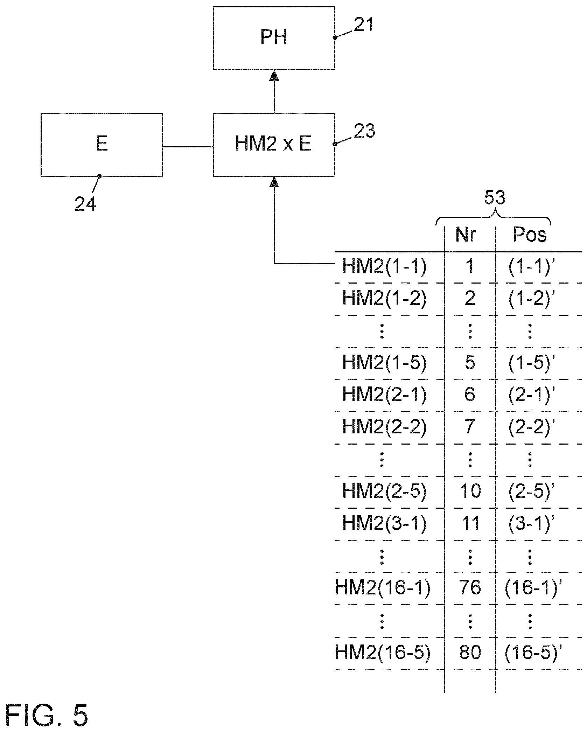

Die Fig. 5 beschreibt nun, wie die zeitlichen Helligkeits-Mittelwerte HM2 der Helligkeitssteuermatrix 52 zur Steuerung einer Projektionshelligkeit PH des von der bildgebenden Einrichtung 21 zu projizierenden Bildes 22 beziehungsweise 40 dienen.

So werden die zeitlichen Helligkeits-Mittelwerte HM2 der Sektoren S als Matrix-Helligkeitswerte der Helligkeitssteuermatrix 52 nacheinander und in einer fest vorgegebenen Reihenfolge an die Steuereinrichtung 23 zum Sektor individuellen Steuern der Projektionshelligkeit PH des projizierten Bildes 22 beziehungsweise 40 übermittelt. Dabei kann beispielsweise in einer Steuertabelle 53 hinterlegt sein, dass der erste übertragene Matrix-Helligkeitswert HM2 immer einem Sektor S' des projizierten Bildes 22 beziehungsweise 40 in der Position (1-1)', also ebenfalls in der ersten Spalte und in der ersten Zeile, zugeordnet ist. Dem an sechsundsiebzigster Stelle eingelesenen, zeitlichen Helligkeits-Mittelwert HM2 ist analog auf dem projizierten Bild 22 bzw. 40 immer ein Sektor S' mit der Position (16 -1)' zugeordnet, und so weiter.

Jeder eingelesene, zeitliche Helligkeits-Mittelwert HM2 wird in der Steuereinrichtung 23 mit einem empirisch ermittelten Erfahrungsfaktor E multipliziert. Der Erfahrungsfaktor E und/oder die Steuertabelle 53 können beispielsweise in der Speichereinrichtung 24 abgespeichert sein.

Somit werden aus den zeitlichen Helligkeits-Mittelwerten HM2 Projektionshelligkeiten PH für alle in der Fig. 6 ersichtlichen Sektoren S' des für den Fahrer F ersichtlichen, projizierten Bildes 40 errechnet. Dabei ist darauf hinzuweisen, dass eine zusätzliche Kamera 60 (vgl. Fig. 1) vorhanden sein kann. Die Kamera 60 kann dazu dienen, den Innenraum bzw. die Position der Augen des Fahrers F zu erfassen und die erfassten Positionsdaten an die Steuereinrichtung 23 zu leiten. Aufgrund eines bestimmten, in der Steuereinrichtung 23 hinterlegten Algorithmus wird dann aus diesen Informationen eine veränderte Position des zu projizierenden Bildes 22 bzw. 40 innerhalb des Hintergrundbildes 51 berechnet. Die Zuordnung der Projektionshelligkeiten PH ändert sich somit auch in Abhängigkeit der Position des Fahrers F.

Bei dem zuvor beschriebenen Sektor individuellen Steuern der Projektionshelligkeit PH wird jedem Pixel P des von der bildgebenden Einrichtung 21 projizierten Bildes 40 beziehungsweise den Teilbildern 41 und 42 innerhalb eines Sektors S' die gleiche Projektionshelligkeit PH zugeordnet.

Die Figur zeigt die Ansicht des Fahrers F durch die Frontscheibe 10. Es ist erkennbar, dass die Hintergrundfläche A für das zu projizierende, virtuelle Bild 40, von dessen Teilfläche das bereits beschriebene Hintergrundbild 51 erstellt wurde, eine Fahrbahn ist.

Durch das virtuelle Bild 40 soll nun im linken Bildbereich ein virtuelles Teilbild 41 in Form einer Anzeige der Fahrgeschwindigkeit und im rechten Bildbereich ein virtuelles Teilbild 42 in Form eines Abbiegepfeils projiziert werden.

Ferner ist ersichtlich, dass das projizierte, virtuelle Bild 40 der Größe und Position des aufgenommenen Hintergrundbildes 51 entspricht. Auch die Wahl des Rasters R' des projizierten Bildes 40 ist entsprechend dem Raster R gewählt. Dadurch gebildete Sektoren S' des projizierten Bildes 40 sind also in etwa so groß wie die Sektoren S des aufgenommenen Hintergrundbildes 51.

Es ist auch erkennbar, dass das zu projizierende Teilbild 41 in Sektoren S' liegt, deren Positionen auf einem hell erleuchteten Straßenabschnitt liegen, wie beispielsweise die Positionen (2-1)' und (5-2)' erkennen lassen. Auf Grund der zuvor gebildeten, zeitlichen Helligkeits-Mittelwerte HM2 wird daher das virtuelle Teilbild 41 besonders hell projiziert, um trotz der Helligkeit des Hintergrundes vom Fahrer F noch gut erkennbar zu sein.

Das virtuelle Teilbild 42 hingegen liegt in einem Bildbereich, wo die Sektoren S des Hintergrundbildes 51 aufgrund eines Schattenwurfs in ihren Helligkeiten deutlich niedriger ausfallen. Dies ist beispielsweise an dem Sektor S mit der Position 11-1 erkennbar. Die hier zuvor gebildeten, zeitlichen Helligkeits-Mittelwerte HM2 liegen entsprechend niedriger, so dass auch hier die Projektionshelligkeiten PH für den darzustellenden Abbiegepfeil niedriger ausfallen. Eine Blendung des Fahrers F wird dadurch vermieden.

Es sei noch darauf hingewiesen, dass die in den Teilbildern 41 und 42 zu projizierenden Darstellungen als sogenannte Vektorgrafiken in der Speichereinrichtung 24 hinterlegt sind. Diese Vektorgrafiken können bei Bedarf durch die Steuereinrichtung 23 beliebig und ohne großen Rechenaufwand skaliert werden. Abweichend vom Ausführungsbeispiel ist auch eine pixelgenaue Ablage von Grafiken denkbar, wodurch der Rechenaufwand noch weiter gesenkt werden kann.

### Bezugszeichenliste

- 10: Frontscheibe
- 20: Head-Up-Display
- 21: bildgebende Einrichtung
- 22: projiziertes Bild
- 23: Steuereinrichtung
- 24: Speichereinrichtung
- 30: Instrumententafel
- 40: projiziertes, virtuelles Bild
- 41: virtuelles Teilbild
- 42: virtuelles Teilbild
- 50: Kamera
- 51: aufgenommenes Hintergrundbild
- 52: Helligkeitssteuermatrix
- 53: Steuertabelle
- 60: Kamera
- 1-1 bis 16-5: Position der Sektoren auf dem aufgenommenen Hintergrundbild
- (1-1)' bis (16-5)': Position der Sektoren auf dem projizierten Bild

- A: Hintergrundfläche
- E: Erfahrungsfaktor
- F: Fahrer
- HM1: örtlicher Helligkeits-Mittelwert
- HM2: zeitlicher Helligkeits-Mittelwert, Matrix-Helligkeitswert
- K: Kraftfahrzeug
- P: Pixel
- PH: Projektionshelligkeit
- R: Raster des aufgenommenen Hintergrundbildes
- R': Raster des projizierten Bildes
- S: Sektoren des aufgenommenen Hintergrundbildes
- S': Sektoren des projizierten Bildes
- t: Zeit
- t1-t5: Zeitpunkte
- T: Zeitspanne

## Patentansprüche

1. Verfahren zur Steuerung der Projektionshelligkeit (PH) eines von einer bildgebenden Einrichtung (21) eines in einem Kraftfahrzeug (K) befindlichen Head-Up-Displays (20) projizierten Bildes (22), welches in das Sichtfeld eines Fahrers (F) reflektiert wird, wodurch der Fahrer (F) ein virtuelles Bild (40) wahrnimmt, wobei ein Helligkeitsprofil für eine aus Sicht des Fahrers (F) hinter dem virtuellen Bild (40) befindliche Hintergrundfläche (A) bestimmt und aus dem Helligkeitsprofil eine Helligkeitssteuermatrix (52) bestimmt wird, mit deren Hilfe eine Projektionshelligkeit (PH) des von der bildgebenden Einrichtung (21) projizierten Bildes (22) gesteuert wird, wobei die aufeinander folgenden Schritte für eine bestimmte Zeitspanne (T) durchgeführt werden:
• Aufnehmen von mehreren Hintergrundbildern (51) der Hintergrundfläche (A) mittels einer Kamera (50)
**gekennzeichnet durch** die aufeinander folgenden, weiteren Schritte:
• Unterteilung jedes aufgenommenen Hintergrundbildes (51) in ein vordefiniertes Raster (R) von Sektoren (S), wobei die Größe eines jeden Sektors (S) mehrere Pixel (P) umfasst
• Bestimmung eines örtlichen Helligkeits-Mittelwertes (HM1) über alle Pixel (P) eines jeden Sektors (S) eines aufgenommenen Hintergrundbildes (51)
• Ableitung eines für die Zeitspanne (T) geltenden, zeitlichen Helligkeits-Mittelwertes (HM2) eines jeden Sektors (S) über alle aufgenommenen Hintergrundbilder (51)
• Bestimmung der Helligkeitssteuermatrix (52), bestehend aus den den Sektoren (S) jeweils zugeordneten, zeitlichen Helligkeits-Mittelwerten (HM2)
• Sektor individuelles Steuern der Projektionshelligkeit (PH) für Sektoren (S') des von der bildgebenden Einrichtung (21) projizierten Bildes (22) in Abhängigkeit der Helligkeitssteuermatrix (52), wobei das projizierte Bild (22) in ein solches Raster (R') von Sektoren (S') unterteilt wird, welches dem Raster (R) des aufgenommenen Hintergrundbildes (51) entspricht.

2. Verfahren nach Anspruch 1, **dadurch gekennzeichnet, dass** durch das vordefinierte Raster (R, R') von Sektoren (S, S') das aufgenommene Hintergrundbild (51) und das projizierte Bild (22, 40) in gleich große, quadratische Bereiche aufgeteilt werden.

3. Verfahren nach Anspruch 1 oder 2, **dadurch gekennzeichnet, dass** beim Sektor individuellen Steuern der Projektionshelligkeit (PH) jedem Pixel (P) des von der bildgebenden Einrichtung (21) projizierten Bildes (22, 41) innerhalb eines Sektors (S') der gleiche Helligkeitswert zugeordnet wird.

4. Verfahren nach einem der vorhergehenden Ansprüche, **dadurch gekennzeichnet, dass** die zeitlichen Helligkeits-Mittelwerte (HM2) der Sektoren (S) als Matrix-Helligkeitswerte (HM2) der Helligkeitssteuermatrix (52) nacheinander und in fest vorgegebener Reihenfolge an eine Steuereinrichtung (23) zum Sektor individuellen Steuern der Projektionshelligkeit (PH) des projizierten Bildes (22, 40) übermittelt werden.

5. Verfahren nach einem der vorhergehenden Ansprüche, **dadurch gekennzeichnet, dass** aus wenigstens einem Teil der Matrix-Helligkeitswerte (HM2) der Helligkeitssteuermatrix (52) Projektions-Helligkeitswerte (PH) des projizierten Bildes (22,40) dadurch abgeleitet werden, dass ein Projektions-Helligkeitswert (PH) aus dem Produkt des jeweiligen Matrix-Helligkeitswertes (HM2) mit einem vorgegebenen Erfahrungsfaktor (E) gebildet wird.

6. Verfahren nach Anspruch 5, **dadurch gekennzeichnet, dass** durch die bildgebende Einrichtung (21) zu projizierende Symbole, Piktogramme und/oder alphanumerische Zeichen auf Basis von Vektorgrafiken erzeugt werden.

7. Verfahren nach einem der vorhergehenden Ansprüche, **dadurch gekennzeichnet, dass** eine Position der Augen des Fahrers (F) erfasst und daraus eine Position des zu projizierenden Bildes (22) abgeleitet wird.

## Claims

1. Method for controlling the projection brightness (PH) of an image (22) projected by an imaging device (21) of a head-up display (20) located in a motor vehicle (K), which image is reflected into the field of vision of a driver (F), whereby the driver (F) perceives a virtual image (40), a brightness profile being determined for a background surface (A) located behind the virtual image (40) from the perspective of the driver (F), and a brightness control matrix (52) being determined from the brightness profile, with the aid of which a projection brightness (PH) of the image (22) projected by the imaging device (21) is controlled, the following successive steps being carried out for a specific period of time (T):
• recording several background images (51) of the background surface (A) using a camera (50)
**characterized by** the following further successive steps:
• dividing each recorded background image (51) into a predefined grid (R) of sectors (S), the size of each sector (S) comprising a plurality of pixels (P)
• determining a local brightness mean value (HM1) over all pixels (P) of each sector (S) of a recorded background image (51)
• deriving a temporal brightness mean value (HM2) of each sector (S) for the period of time (T) over all recorded background images (51)
• determining the brightness control matrix (52), consisting of the temporal brightness mean values (HM2) assigned to the sectors (S)
• sector-individual control of the projection brightness (PH) for sectors (S') of the image (22) projected by the imaging device (21) depending on the brightness control matrix (52), the projected image (22) being divided into a grid (R') of sectors (S') which corresponds to the grid (R) of the recorded background image (51).

2. Method according to claim 1, **characterized in that** by the predefined grid (R, R') of sectors (S, S'), the recorded background image (51) and the projected image (22, 40) are divided into equally sized, square regions.

3. Method according to claim 1 or 2, **characterized in that** during sector-individual control of the projection brightness (PH), each pixel (P) of the image (22, 41) projected by the imaging device (21) within a sector (S') is assigned the same brightness value.

4. Method according to any of the preceding claims, **characterized in that** the temporal brightness mean values (HM2) of the sectors (S) are transmitted as matrix brightness values (HM2) of the brightness control matrix (52) one after the other and in a fixed predetermined order to a control device (23) for sector-individual control of the projection brightness (PH) of the projected image (22, 40).

5. Method according to any of the preceding claims, **characterized in that** projection brightness values (PH) of the projected image (22,40) are derived from at least some of the matrix brightness values (HM2) of the brightness control matrix (52) by forming a projection brightness value (PH) from the product of the relevant matrix brightness value (HM2) with a predetermined experience factor (E).

6. Method according to claim 5, **characterized in that** symbols, pictograms and/or alphanumeric characters to be projected by the imaging device (21) are generated on the basis of vector graphics.

7. Method according to any of the preceding claims, **characterized in that** a position of the driver's (F) eyes is detected and a position of the image (22) to be projected is derived therefrom.

## Revendications

1. Procédé pour la commande de la luminosité de projection (PH) d'une image (22) projetée par un dispositif de formation d'image (21) d'un affichage tête haute (20) se trouvant dans un véhicule automobile (K), laquelle image est réfléchie dans le champ de vision d'un conducteur (F), moyennant quoi le conducteur (F) perçoit une image virtuelle (40), dans lequel un profil de luminosité est déterminé pour une surface d'arrière-plan (A) se trouvant derrière l'image virtuelle (40) du point de vue du conducteur (F) et une matrice de commande de luminosité (52) est déterminée à partir du profil de luminosité, à l'aide de laquelle une luminosité de projection (PH) de l'image (22) projetée par le dispositif de formation d'image (21) est commandée, dans lequel les étapes successives sont exécutées pendant une durée (T) déterminée :
• enregistrement de plusieurs images d'arrière-plan (51) de la surface d'arrière-plan (A) au moyen d'une caméra (50)
**caractérisé par** les étapes supplémentaires successives consistant à :
• diviser chaque image d'arrière-plan (51) enregistrée en un quadrillage (R) prédéfini de secteurs (S), dans lequel la taille de chaque secteur (S) comprend plusieurs pixels (P)
• déterminer une valeur moyenne de luminosité (HM1) locale sur tous les pixels (P) de chaque secteur (S) d'une image d'arrière-plan (51) enregistrée
• dériver une valeur moyenne de luminosité dans le temps (HM2), valable pour la durée (T), de chaque secteur (S) à partir de toutes les images d'arrière-plan (51) enregistrées
• déterminer la matrice de commande de luminosité (52), constituée des valeurs moyennes de luminosité dans le temps (HM2) respectivement associées aux secteurs (S)
• commander individuellement par secteur la luminosité de projection (PH) pour des secteurs (S') de l'image (22) projetée par le dispositif de formation d'image (21) en fonction de la matrice de commande de luminosité (52), dans lequel l'image (22) projetée est divisée en un tel quadrillage (R') de secteurs (S') qui correspond au quadrillage (R) de l'image d'arrière-plan (51) enregistrée.

2. Procédé selon la revendication 1, **caractérisé en ce que,** au moyen du quadrillage (R, R') prédéfini de secteurs (S, S'), l'image d'arrière-plan (51) enregistrée et l'image (22, 40) projetée sont divisées en zones carrées de même taille.

3. Procédé selon la revendication 1 ou 2, **caractérisé en ce que,** lors de la commande individuelle par secteur de la luminosité de projection (PH), la même valeur de luminosité est attribuée à chaque pixel (P) de l'image (22, 41) projetée par le dispositif de formation d'image (21) à l'intérieur d'un secteur (S').

4. Procédé selon l'une des revendications précédentes,
**caractérisé en ce que** les valeurs moyennes de luminosité dans le temps (HM2) des secteurs (S) sont transmises, successivement et dans un ordre prédéterminé fixe, en tant que valeurs de luminosité de matrice (HM2) de la matrice de commande de luminosité (52) à un dispositif de commande (23) pour la commande individuelle par secteur de la luminosité de projection (PH) de l'image (22, 40) projetée.

5. Procédé selon l'une des revendications précédentes,
**caractérisé en ce que** des valeurs de luminosité de projection (PH) de l'image (22, 40) projetée sont dérivées d'au moins une partie des valeurs de luminosité de matrice (HM2) de la matrice de commande de luminosité (52) de sorte qu'une valeur de luminosité de projection (PH) est formée à partir du produit de la valeur de luminosité de matrice (HM2) respective par un facteur d'expérience (E) prédéterminé.

6. Procédé selon la revendication 5, **caractérisé en ce que** des symboles, pictogrammes et/ou caractères alphanumériques à projeter sont générés par le dispositif de formation d'image (21) sur la base de graphiques vectoriels.

7. Procédé selon l'une des revendications précédentes,
**caractérisé en ce qu'**une position des yeux du conducteur (F) est détectée et une position de l'image (22) à projeter est dérivée de celle-ci.
